**Europäisches Patentamt**

(19) **European Patent Office**

**Office européen des brevets**

(11) Publication number: **0 120 078**
**B1**

(12) **EUROPEAN PATENT SPECIFICATION**

(45) Date of publication of patent specification: **20.01.88**

(21) Application number: **83903339.6**

(22) Date of filing: **27.09.83**

(86) International application number:
**PCT/US83/01492**

(87) International publication number:
**WO 84/01401 12.04.84 Gazette 84/10**

(51) Int. Cl.⁴: **E 01 H 1/04, B 65 G 65/23**

(54) **HOPPER SUPPORT AND DUMP MECHANISM.**

(30) Priority: **30.09.82 US 431949**

(43) Date of publication of application:
**03.10.84 Bulletin 84/40**

(45) Publication of the grant of the patent:
**20.01.88 Bulletin 88/03**

(84) Designated Contracting States:
**BE CH DE FR GB LI NL**

(56) References cited:
**GB-A- 852 853**
**GB-A-1 126 706**
**US-A-3 712 675**
**US-A-3 740 097**
**US-A-3 937 502**
**US-A-4 219 901**

(73) Proprietor: **FMC CORPORATION**
**200 East Randolph Drive**
**Chicago Illinois 60601 (US)**

(72) Inventor: **GUNNARSSON, Arne, N.**
**1439 West 8th**
**Upland, CA 91786 (US)**

(74) Representative: **Bardehle, Heinz, Dipl.-Ing. et al**
**Patent- und Rechtsanwälte Bardehle-**
**Pagenberg-Dost-Altenburg & Partner**
**Galileiplatz 1 Postfach 86 06 20**
**D-8000 München 86 (DE)**

Courier Press, Leamington Spa, England.

## Description

Background of the Invention
*Field of the Invention*

The present invention relates to a street sweeping machine according to the precharacterizing of claim 1 as known i.e. from US—A—4 219 901.

*Description of the Prior Art*

Debris collection hoppers and dump mechanisms on street sweeper vehicles are shown in US—A—3,369,685 and US—A—3,761,988. US—A—3 369 685 discloses a stationary debris hopper with means for moving the debris internally of the hopper toward a dumping port. US—A—3 761 988 discloses a road sweeper having a debris hopper which is moved relative to the road sweeper frame through two lifting stages about two spaced apart pivot axes by two pairs of lifting actuators.

*Object of the Invention*

The object of the invention is essentially to provide a stable street sweeping machine of the type mentioned in the precharacterizing part of claim 1 with a precise control of the discharge of the debris from the hopper within the tilting operation of the hopper.

*Summary of the Invention*

This object is reached according to the invention by a street sweeping machine as defined in claim 1. The street sweeping machine has a framework and carries a power source. A debris collection and dumping apparatus is included therein which features a hopper defining a debris collection chamber. An upwardly and rearwardly sloping wall and a top surface bound portions of the chamber. A door is located in the top surface at the rear edge thereof and may be moved between opened and closed positions. A pair of upwardly extending posts are attached to the rear portion of the framework and a pair of arms extend rearwardly from the hopper. Means is provided which extend between a first point spaced from the hopper near the ends of the arms and the posts for defining a single pivot axis about which the hopper rotates relative to the framework. A linear actuator is coupled to the source of power in the street sweeper wherein the actuator extends between a median point on one of the arms and a point on the framework located forward of the pivot axis. In this fashion extension of the actuator causes the hopper to pivot upwardly and rearwardly about the single pivot axis.

*Brief Description of the Drawings*

Figure 1 is a diagrammatic perspective view with parts in phantom line and other parts broken away illustrating a mobile street sweeper which incorporates the present invention.

Figure 2 is a perspective view of the mobile street sweeper which incorporates the present invention.

Figure 3 is an elevation view of the street sweeper showing one embodiment of the debris collection and dumping system of the present invention.

Figure 4 is an elevation view of a street sweeper incorporating another embodiment of the debris collection and dumping system of the present invention.

*Description of the Preferred Embodiments*

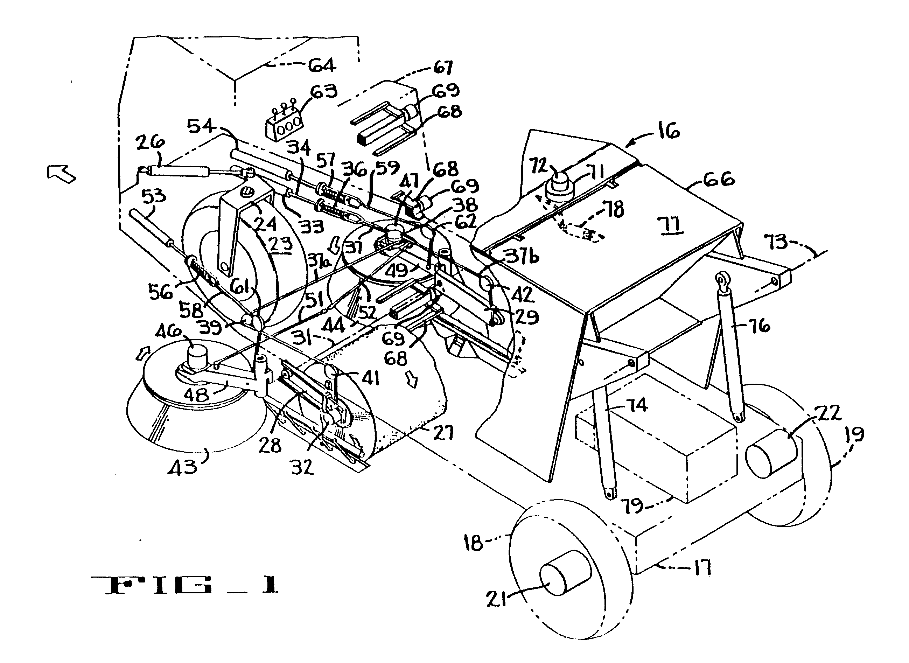

A street sweeper shown generally at 16 in Figure 1 includes a chassis or framework 17 supported by a pair of rear wheels 18 and 19 driven individually by hydraulic motors 21 and 22 respectively. A single steerable front wheel 23 is journaled on a yoke 24 which pivotally supports the front of the chassis 17 and is steered by a hydraulic cylinder 26 connected between the chassis and the yoke.

A debris pick-up broom 27 is rotatably mounted on a pair of longitudinally extending broom support arms 28 and 29 (Figure 1) which have their forward ends pivotally supported on the framework 17 for movement about a horizontal pivot axis 31. The pick-up broom is directly driven by a hydraulic motor 32 and is moved between an elevated transport position and a lowered sweeping position by a hydraulic cylinder 33. The hydraulic cylinder has a piston contained therein with an adjustable member or rod 34 extending therefrom which is coupled to a spring assembly 36. A dual cable 37 is attached to the other end of the spring assembly and is directed over dual sheaves 38 toward the free ends of the broom support arms 28 and 29. One reach 37a of the dual cable successively passes around sheaves 39 and 41 to the free end of the brush support arm 28. Another reach 37b of the dual cable passes around a sheath 42 to the free end of the brush support arm 29. The aforementioned sheaves are journaled to the framework 17.

The sweeper 16 also includes left and right gutter brushes 43 and 44 driven by individual hydraulic motors 46 and 47. The gutter brushes and hydraulic motor are mounted on left and right gutter brush suspension arms 48 and 49 which are in turn mounted for vertical movement relative to the framework 17 by suspension means to be hereinafter described. Cables 51 and 52 are connected between the framework 17 and the associated arms 48 and 49 respectively to limit the outward lateral movement of the gutter brushes.

The gutter brushes are each moved between a raised transport position and a lowered road engaging gutter sweeping position by hydraulic cylinders 53 and 54. One end of each of the hydraulic cylinders 53 and 54 is connected to the chassis 17 and the other end is connected to an associated spring assembly 56 and 57 which is similar to the spring assembly 36 aforementioned. Cables 58 and 59 are attached to and extend from the spring assemblies 56 and 57 respectively over sheaves 61 and 62 and are fastened at the other end to the left and right gutter brush arms 48 and 49. An operator actuated control console 63 is provided in a cab portion 64 of the street sweeper 16 for controlling the movement of the hydraulic cylinders 33, 53 and 54 to thereby control the movement of the associated pick-up broom and gutter brushes between their respective transport positions and positions in engagement with the underlying surface to be swept and also to obtain selected sweeping pressures on the underlying surface. When the gutter brushes 43 and 44 are raised to the transport position, the brooms are mounted so as to move inwardly toward the centerline of the chassis 17.

The debris directed into the path of the pick-up broom 27 by the gutter brushes 43 and 44 is swept forwardly by the pick-up broom and transported to a hopper 66 by means of an elevator having a housing 67 (shown partially in phantom lines). The elevator includes a plurality of paddle wheels 68 (parts of three such paddles being illustrated in Figure 1) which are each independently driven by a hydraulic motor 69 for progressively elevating the debris within the elevator and discharging it into the hopper 66. A low volume air blower 71 is driven by a hydraulic motor 72 and is mounted on top of the hopper for creating an updraft of air through the elevator 67 thereby aiding the movement of leaves or the like through the elevator and into the hopper 66.

The hopper 66 is supported on the chassis 17 for pivotal movement about an axis 73 in one embodiment between the illustrated debris collection position and a debris dumping position. A pair of hydraulic cylinders 74 and 76 are pivotally connected between the chassis 17 and the hopper 66 to pivot the hopper between the two positions. The hopper includes a door or gate 77 which is pivotally attached to the hopper. A gate opening hydraulic cylinder 78 is connected between the hopper structure and the gate 77 for pivoting the gate between an open position and the illustrated closed position.

The sweeper 16 includes an engine 79 which drives a hydraulic pump (not shown) which provides hydraulic pressure for the various hydraulically actuated components on the street sweeper. The engine also provides electrical power through conventional means for components in the street sweeper which require electrical energy for actuation.

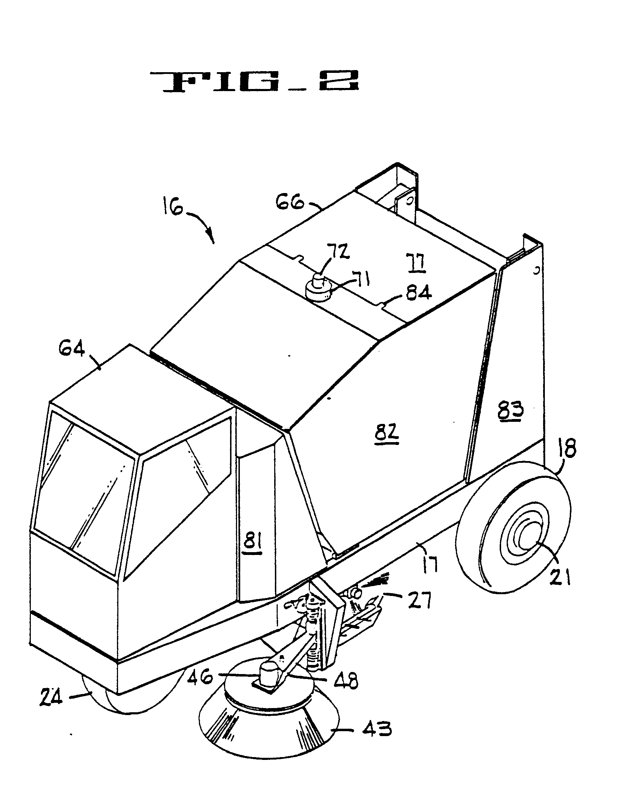

With reference to Figure 2 of the drawings the street sweeping vehicle 16 is shown in perspective view wherein the forwardly located operator cab portion 64 is seen to be above the single front steerable wheel 24 with a fairing 81 located directly behind the cab and surrounding the debris elevator 67. Fairing side panels 82 are also attached to each side of the debris collection hopper 66 which is located between the elevator fairing and engine fairing 83 enclosing the engine 79 and extending upwardly from the framework at the rear end thereof. A laterally extending hinge 84 may be seen in Figure 2 extending across a top surface 87 of the chamber within the debris collection hopper 66. The door or gate 77 may be seen to be attached to the hinge 84 at the forward edge of the door. The door extends rearwardly from the hinge to the rear edge of the top surface on the hopper 66.

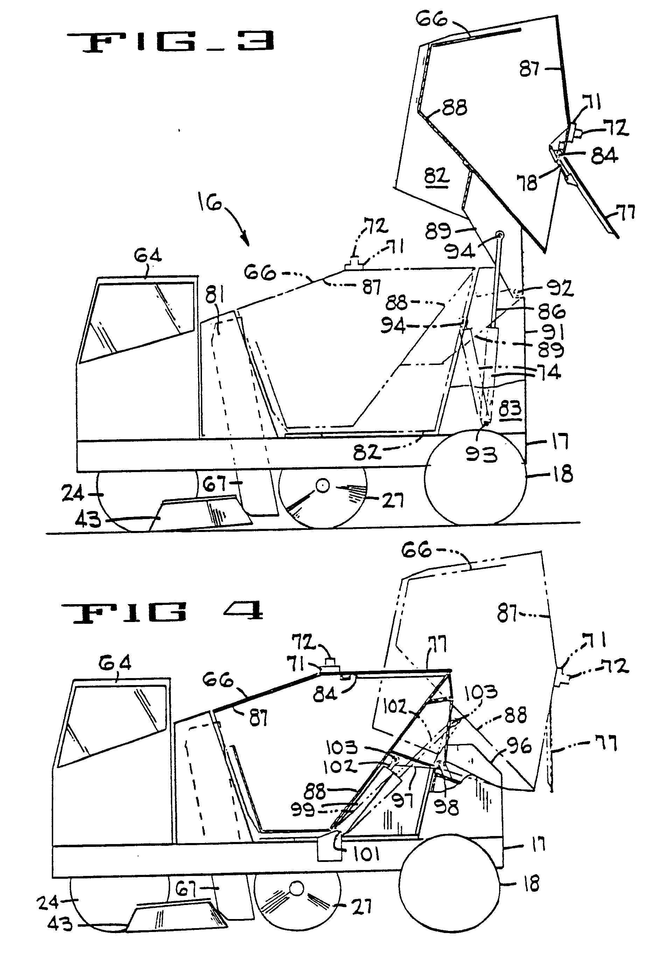

With reference to Figure 3 of the drawings the high dump embodiment of the present invention will be described. The hopper 66 is shown in phantom lines in Figure 3 in the debris collection or receiving position resting on the framework 17. A linear actuator represented by the hydraulic cylinder 74 has a piston rod 86 which may be urged to extend therefrom to be retracted therewithin. The cylinder is shown in phantom lines in the retracted position. A pair of such cylinders may be used (i.e., cylinder 74 and 76 of Figure 1) to move the hopper between lowered debris collection and raised debris dumping positions.

The debris collection chamber defined by the hopper 66 has the aforementioned top surface 87 and a rearwardly and upwardly sloping rear surface 88 as seen in the debris collection position depicted by phantom lines in Figure 3. A pair of arms 89 are shown extending rearwardly from the rear surface of the hopper in the debris collection position. A pair of upwardly extending posts 91 are attached to the rear portion of the frame 17 which reach approximately to the level of the top surface of the hopper 66. The posts 91 are somewhat box-like and part of the volume they enclose is used as a reservoir for hydraulic fluid. A pair of aligned pivots 92 extend between respective ones of the arms 89 and posts 91. A line through the pivots 92 defines the single axis 73 (Figure 1) spaced rearwardly from the hopper 66 about which the hopper rotates between the debris collection position, shown in phantom lines, and the dumping position shown in section in Figure 3.

The linear actuator 74 is shown having one end fixed at a pivot point 93 on the frame 17. The pivot 93 may be seen to be disposed forwardly of the aligned pivots 92. The free end of the rod 86 extending from the actuator 74 is pivotally attached at a median point 94 on one of the arms 89. The point 94 is therefore also displaced forwardly relative to the frame 17 from the pivot axis 73 through the aligned pivots 92. It may therefore be seen that extension of the rod 86 from the actuator 74 causes the hopper 66 to pivot about the axis 73 (aligned pivots 92) to thereby rotate the hopper 66 from the debris collection position to the debris dumping position shown in section in Figure 3. It may be seen that the rear surface of the chamber within the hopper 66 assumes a downwardly and rearwardly sloping attitude when the hopper is in the raised dumping position so that debris may readily be discharged.

Since the configuration of the invention shown in Figure 3 is utilized to dump debris over the edge of the high walled debris receptacle, debris would slide off of the rear surface 88 within the hopper 66 before the elevated dump position was reached if the door 77 was allowed to swing open before the dumping position was reached. Therefore, as seen in Figure 3, the actuator 78 for the door 77 is provided. The door actuator may be a hydraulic device. In such a case hydraulic pressure is selectively coupled to the linear actuator 74 from the hydraulic pressure source through a two way valve (not shown) in a sense to cause the rod 86 to extend therefrom. The rod 86 proceeds to extend and to rotate the hopper 66 into the raised dumping position and the door 77 is held closed by the actuator 78. When the rod 86 reaches the end of travel in the actuator 74, the pressure builds up to system pressure, having dropped therefrom to some degree while the piston to which the rod 86 is attached is moving axially within the actuator. The build up of the pressure within the actuator 74 causes an overpressure signal to the two way valve which utilizes the overpressure to open the second flow path through the valve. This latter flow is coupled to the actuator 78 in a sense to cause the actuator to move the door 77 to the open position depicted in Figure 3. The debris thus falls out of the hopper 66 over the wall of the stationary debris receptable only when the rear edge of the hopper is disposed over the interior of the stationary receptacle. Control selection by the street sweeper operator to return the hopper 66 from the raised debris dumping position to the lowered debris collection system causes the rod 86 to retract in the actuator 74 until it reaches the fully retracted position as shown in phantom lines in Figure 3, whereupon the same overpressure sensing causes the two way valve to couple pressure to the door actuator 78 in a sense to cause the door 77 in the top of the hopper 66 to move to the closed position. It should be noted that if the linear actuator 74 was an electrically powered device (such as a ball screw), that sequential switching could be provided to obtain the aforementioned sequencing of hopper rotation between debris collection and debris dumping positions and hopper door operation between open and closed positions.

Turning to Figure 4 another embodiment of the present invention is seen wherein the hopper 66 is substantially the same having the top surface 87 within which the door 77 is disposed on the hinge 84 and having the upwardly and rearwardly sloping rear surface 88 as seen in section in Figure 4 while the hopper is in the lowered debris collecting position. As also seen in Figure 4 a pair of upwardly extending posts 96 are attached to the rear end of the framework 17. The posts extend to a height which is approximately one-half the height of the hopper 66. As discussed with regard to the posts 91 seen in Figure 3, the posts 96 are box-like and part of the enclosed volume is utilized as a hydraulic fluid reservoir. A pair of arms 97 extend from the rear surface of the hopper 66, but have a slightly different configuration as shown than the arms 89 in the embodiment of Figure 3. In this fashion all hoppers may be made alike and may thereafter be fitted with the appropriate arms 89 or 97 for high dump or low dump configurations respectively.

A pivot 98 is provided between each of the arms 97 and a respective one of the short posts 96. Another linear actuator 99 is shown pivotally fixed at a pivot 101 at one end of the framework 17 and having a rod 102 extending from the other end of the actuator. The free end of the rod is pivotally attached at a median point 103 on one of the arms 97. As in the embodiment of Figure 3, there may be dual actuators in the installation similarly mounted between the framework and a median point on the arms. The median point may be seen in Figure 4 to be located forwardly from the aligned pivots 98 which define the single axis of rotation for the hopper 66 relative to the framework 17. Since point 103 may be seen to lie on the side of the pivot axis defined by the pivots 98 for both retracted and extended positions, it may be seen that extension of the rod 102 from the actuator 99 disposes the hopper 66 in the raised debris dumping position as shown in phantom lines in Figure 4 and retraction returns the hopper on the same path to the lowered debris collection position as shown in section in Figure 4. The low dump embodiment of Figure 4 includes a door actuator with operating characteristics similar to those described for the embodiment of Figure 3.

The hoppers 66, as mentioned hereinbefore, are all the same, only mounting features being distinct. The hopper has about a 3.82 cubic meter (five cubic yard) volumeric capacity which allows for about 408 kg (9000 pounds) of collected debris in the preferred embodiments. The high dump embodiment of Figure 3 provides discharge of collected debris at a height of about 2.9 meters (one hundred fourteen inches) above the underlying surface.

**Claims**

1. A street sweeping machine comprising
a framework (17) supported on front and rear wheels (23, 18, 19),
a power source mounted on the framework (17),
a hopper (66) supported on the framework (17) for pivotal movement about an axis (73) between an upright debris collecting position and a raised tilted debris dumping position, the hopper (66) having an at least partly hinged top wall (77) and in the upright position an upwardly and rearwardly sloping rear wall (88),
a pair of upwardly extending posts (91) attached to the framework (17),
a pair of arms (89) extending in tilting direction from the hopper (66) and pivotally mounted to the posts (91) on the axis (73),
a linear actuator (74) coupled to the source of power, the actuator (74) extending between a median point (94) on one arm (89) of the pair of arms and a point (93) on the framework (17) offset to the pivot axis (73) opposite to the tilting direction, whereby an extension (86) of the actuator (74) causes the arms (89) to pivot the hopper (66) about the axis (73) to the dumping position,

characterized in that

the framework (17) is supported adjacent opposite ends on the front and rear wheels (23, 18, 19),

the posts (91) are attached to the framework (17) over the rear wheels (18, 19),

the top wall includes a forward top wall portion (87) connected to lateral side wall panels (82) and partially closing a debris collecting chamber and a door (77) hinged to the forward top wall portion (87) and extending rearwardly over an open portion of the debris collecting chamber to an upper edge of the rear wall (88),

a door actuator (78) is provided attached between the forward top wall portion (87) and the door (77) and coupled to the power source, and

switching means are provided for sequentially automatically activating the door actuator (78) following the linear actuator (74) pivoting the hopper (66) into the dumping position for opening the door (77) and dumping the debris from the hopper (66) along the rear wall (88).

2. A street sweeping machine according to claim 1, characterized in that the power source is a source of hydraulic pressure, and that the linear and door actuators (74, 78) comprise hydraulic cylinders coupled to the source of hydraulic pressure and having enclosed pistons with rods (86) extending therefrom, and that the switching means comprises a two-way hydraulic valve directing pressure one-way to the linear actuator (74) until the linear actuator piston reaches its extended limit and means responsive to overpressure caused by limit arrest of the linear actuator piston for directing pressure the other way to the door actuator (78).

**Patentansprüche**

1. Straßenkehrmaschine mit einem Rahmen (17), der auf vorderen und ruckwärtigen Rädern (23, 18, 19) getragen ist, mit einer Antriebseinrichtung, welche an dem Rahmen (17) angeordnet ist, mit einem an dem Rahmen (17) abgestützten Behälter (66), welcher um eine Achse (73) zwischen einer aufrechten Schuttsammelposition und einer angehobenen Kipposition zum Ablanden des Schuttes schwenkbar ist, wobei der Behälter (66) eine wenigstens teilweise schwenkbare Oberwand (77) und in der aufrechten Position eine aufwärts und rückwärts geneigte rückwärtige Wand (88) aufweist, mit einem Paar sich aufrecht erstreckender Ständer (91), die an dem Rahmen (17) befestigt sind, mit einem Paar Arme (89), die sich in Kipprichtung von dem Behälter (66) erstrecken und an den Ständern (91) an der Achse (73) angelenkt sind, mit einem linearen Betätiger (74), der mit der Antriebseinrichtung gekoppelt ist und sich zwischen einem Mittelpunkt (94) an einem Arm (89) des Armpaares und einem Punkt (93) am Rahmen (17) erstreckt, der zur Schwenkachse (73) entgegen der Kipprichtung versetzt ist, so daß eine Erstreckung (86) des Betätigers (74) verursacht, daß die Arme (89) den Behälter (66) um die Achse (73) in die Entladeposition schwenken, dadurch gekennzeichnet, daß der Rahmen (17) neben den gegenüberliegenden Enden an den vorderen und rückwärtigen Rädern (23, 18, 19) abgestützt ist, daß die Ständer (91) an dem Rahmen (17) oberhalb der rückwärtigen Räder (18, 19) befestigt sind, daß die obere Wand einen vorderen oberen Wandabschnitt (87), welcher mit Seitenwänden (82) verbunden ist und teilweise eine Schuttsammelkammer deckt, und eine Tür (77) umfaßt, die an dem vorderen oberen Wandabschnitt (87) angelenkt ist und sich über einen offenen Abschnitt der Schuttsammelkammer rückwärts zu einem oberen Rand der rückwärtigen Wand (88) erstreckt, daß ein Türbetätiger (78) vorgesehen ist, der zwischen dem vorderen oberen Wandabschnitt (87) und der Tür (77) befestigt ist und mit der Antriebseinrichtung gekoppelt ist, und daß eine Schalteinrichtung vorgesehen ist, um folgeabhängig automatisch den Türbetätiger (78) zu aktivieren, wenn der lineare Betätiger (74) den Behälter (66) in die Abladeposition schwenkt, um die Tür (77) zu öffnen und den Schutt aus dem Behälter (66) längs der rückwärtigen Wand (88) abzuladen.

2. Straßenkehrmaschine nach Anspruch 1, dadurch gekennzeichnet, daß die Antriebseinrichtung eine Hydraulikdruckquelle ist, daß der lineare und der Türbetätiger (74, 78) Hydraulikzylinder umfassen, die mit der Hydraulikdruckquelle gekoppelt sind und Kolben mit Stangen (86) aufweisen, die sich davon erstrecken, und daß die Schalteinrichtung ein Zweiwege-Hydraulik-Ventil, welches den Druck einerseits zu dem linearen Betätiger (74) richtet, bis der Kolben des linearen Betätigers seine ausgestreckte Grenzlage erreicht, und eine Einrichtung umfaßt, welche auf Überdruck anspricht, der von der Begrenzungsarretierung des Kolbens des linearen Betätigers verursacht wird, um Druck andererseits zu dem Türbetätiger (78) zu richten.

**Revendications**

1. Machine à balayer les rues comprenant:

un châssis (17) monté sur des roues avant et arrière (23, 18, 19),

une source d'énergie montée sur le châssis (17),

une trémie (66) montée sur le châssis (17) pour décrire un mouvement de pivotement autour d'un axe (73), entre une position verticale, de collection des débris, et une position relevée et basculée, de déversement des débris, la trémie (66) possédant une paroi supérieure (77) au moins partiellement articulée et une paroi arrière (88) inclinée vers le haut et vers l'arrière dans la position verticale,

deux montants (91) s'étendant vers le haut, fixés au châssis (17),

deux bras (89) qui s'étendent à partir de la trémie (66) dans la direction du basculement et qui sont articulés sur les montants (91) pour tourner sur l'axe (73),

un actionneur linéaire (74) raccordé à la source d'énergie, l'actionneur (74) s'étendant entre un point central (94) de l'un des deux bras (89), et un point (93) situé sur le châssis (17) et décalé par rapport à l'axe d'articulation (73) à l'opposé par rapport au sens de basculement, de sorte que l'extension (86) de l'actionneur (74) amène les bras (89) à faire pivoter la trémie (66) autour de l'axe (73) pour la placer dans la position de déversement,

caractérisée en ce que

le châssis (17) prend appui sur les roues avant et arrière (23, 18, 19) dans la région de ses extrémités opposées,

les montants (91) sont fixés au châssis (17) au-dessus des roues arrière (18, 19),

la paroi supérieure comprend une partie avant (87) de paroi supérieure reliée à des panneaux de paroi latérales (82) et qui ferme partiellement une chambre collectrice de débris, et une porte (77), articulée sur la partie avant (87) de la paroi supérieure et s'étendant vers l'arrière, au-dessus d'une partie ouverte de la chambre collectrice de débris, jusqu'au bord supérieur de la paroi arrière (88),

un actionneur de porte (78) est monté entre la partie avant (87) de la paroi supérieure et la porte (77) et raccordé à la source d'énergie, et

des moyens de commutation sont prévus pour activer en séquence et automatiquement l'actionneur de porte (78) après que l'actionneur linéaire (74) a fait pivoter la trémie (66) en l'amenant à la position de déversement, pour ouvrir la porte (77) et déverser les débris de la trémie (66) le long de la paroi arrière (88).

2. Machine à balayer les rues selon la revendication 1, caractérisée en ce que la source d'énergie est une source de pression hydraulique et en ce que les actionneurs linéaires et de porte (74, 78) comprennent des cylindres hydrauliques raccordés à la source de pression hydraulique et renfermant des pistons munis de tiges (86) qui en émergent, et en ce que les moyens de commutation comprennent un distributeur hydraulique à deux voies qui envoie la pression vers l'actionneur linéaire (74) par une voie, jusqu'à ce que le piston de l'actionneur linéaire atteigne sa limite d'extension, et des moyens qui répondent à la surpression provoquée par l'arrêt à la limite du piston de l'actionneur linéaire en faisant envoyer la pression à l'actionneur de porte (78), par l'autre voie.

FIG _ 1

# FIG_2

FIG_3

FIG 4